## Europäisches Patentamt

## European Patent Office

## Office européen des brevets

(11) Veröffentlichungsnummer: **0 057 662**
A2

(12) # EUROPÄISCHE PATENTANMELDUNG

(21) Anmeldenummer: **82810022.2**

(22) Anmeldetag: **21.01.82**

(51) Int. Cl.³: **E 04 B 1/60,** F 16 B 5/06, F 16 B 2/12

(30) Priorität: **29.01.81 CH 575/81**

(43) Veröffentlichungstag der Anmeldung: **11.08.82** Patentblatt 82/32

(84) Benannte Vertragsstaaten: **BE DE GB IT**

(71) Anmelder: **Zwissler, Ruedi, St. Jakobstrasse 87, CH-9000 St. Gallen (CH)**

(72) Erfinder: **Zwissler, Ruedi, St. Jakobstrasse 87, CH-9000 St. Gallen (CH)**

(74) Vertreter: **Ryffel, Rolf, c/o HEPATEX-RYFFEL AG Bahnhofstrasse 58, CH-8001 Zürich (CH)**

(54) **Beschlag zum lösbaren Verbinden von plattenförmigen Bauelementen.**

(57) Der Beschlag enthält zwei die Bauelemente (12, 13) aufnehmende Backen (1, 8) und einen eine Gewindebohrung (6) aufweisenden, mittels einer Schraube (11) mit der einen Backe (8) verbindbaren Gleitteil (5). Die andere Backe (1) weist zwei Rippen (2, 2') auf, welche einen Kanal (3) bilden. An den Rippenenden ist je eine keilförmige Längsnut (4, 4') vorhanden. Der in den Kanal (3) einsteckbare, quaderförmige Gleitteil (5) ist mit in die Längsnuten (4, 4') eingreifenden, keilförmigen Vorsprüngen (7, 7') versehen. Diese Vorsprünge (7, 7') ziehen beim Anziehen der Schraube (11) die Schenkel der zweiten Backe (1) gegen die festzuklemmenden Bauelemente, z.B. Wände (12, 13).
(Figur 1)

0057662

Beschlag zum lösbaren Verbinden von plattenförmigen Bauelementen
================================================

Die Erfindung betrifft einen Beschlag zum lösbaren Verbinden von plattenförmigen Bauelementen, insbesondere Wänden, mit gegeneinander pressbaren, die Elemente aufnehmenden Backen und einem eine Gewindebohrung aufweisenden, mittels einer Schraube mit den Backen verbindbaren Zwischenstück.

Ein derartiger Beschlag ist beispielsweise aus der schweizerischen Patentschrift 335 842 bekannt, welche eine Verbindung von Bauelementen, z.B. Wandteilen, insbesondere solchen verschiedener Stärke, betrifft. Die eine Backe dieses bekannten Beschlages besteht aus einer rohrförmigen Winkelstange, deren freie Enden nach innen umgebogen sind und Stützen für einen als Zwischenstück dienenden Bügel mit Gewindebohrung bilden. Die andere Backe des Beschlages besteht aus einer Profilstange mit einer in die Gewindebohrung des Bügels eingreifenden Schraube. Durch mehr oder weniger starkes Zudrehen der Schraube sollen die Backen mehr oder weniger stark zusammengepresst und die zu verbindenden Wände zwischen denselben gehalten werden. Die Verbindung hat jedoch den Nachteil, dass sich die rohrförmige Winkelstange beim Anziehen der Schraube nach aussen spreizt, so dass kein ausreichender Anpressdruck der beiden Backen an den Wandelementen erzielt wird.

Aufgabe der Erfindung ist es, die Nachteile des bekannten Beschlages zu vermeiden, also einen besonders wirtschaftlich herstellbaren und aus möglichst wenigen Einzelteilen bestehenden Beschlag der eingangs erwähnten Art zu schaffen, welcher eine feste, sichere Verbindung von Bauelementen, wie Wänden, ermöglicht.

Die erfindungsgemässe Lösung der Aufgabe ist im kennzeichnenden Teil des Anspruchs 1 enthalten. Die Ansprüche 2 - 4 enthalten bevorzugte Ausbildungen des erfindungsgemässen Beschlages.

Der Vorteil des erfindungsgemässen Beschlags besteht darin, dass beim Anziehen der Schraube ein starker Anpressdruck der mit den Rippen versehenen Backe gegen die andere Backe und damit eine sichere Festhaltung der zu verbindenden Wände erzielt wird.

Ausführungsbeispiele der Erfindung sind nachfolgend anhand der Zeichnung näher erläutert. Es zeigen:

Fig. 1 eine Draufsicht eines erfindungsgemässen Beschlags für die Verbindung von zwei rechtwinklig zueinander angeordneten Wänden.

Fig. 2 eine Vorderansicht des Zwischenstücks des Beschlags gemäss Figur 1.

Fig. 3 eine Draufsicht des Zwischenstücks gemäss Figur 2.

Fig. 4 eine Draufsicht einer Variante des Beschlags gemäss Figur 1.

Fig. 5 eine Draufsicht eines Beschlags für die Verbindung von zwei geradlinig angeordneten Wänden.

Fig. 6 eine Draufsicht eines Beschlags zum Verbinden von zwei Wänden unter einem Winkel von 120$^{\circ}$.

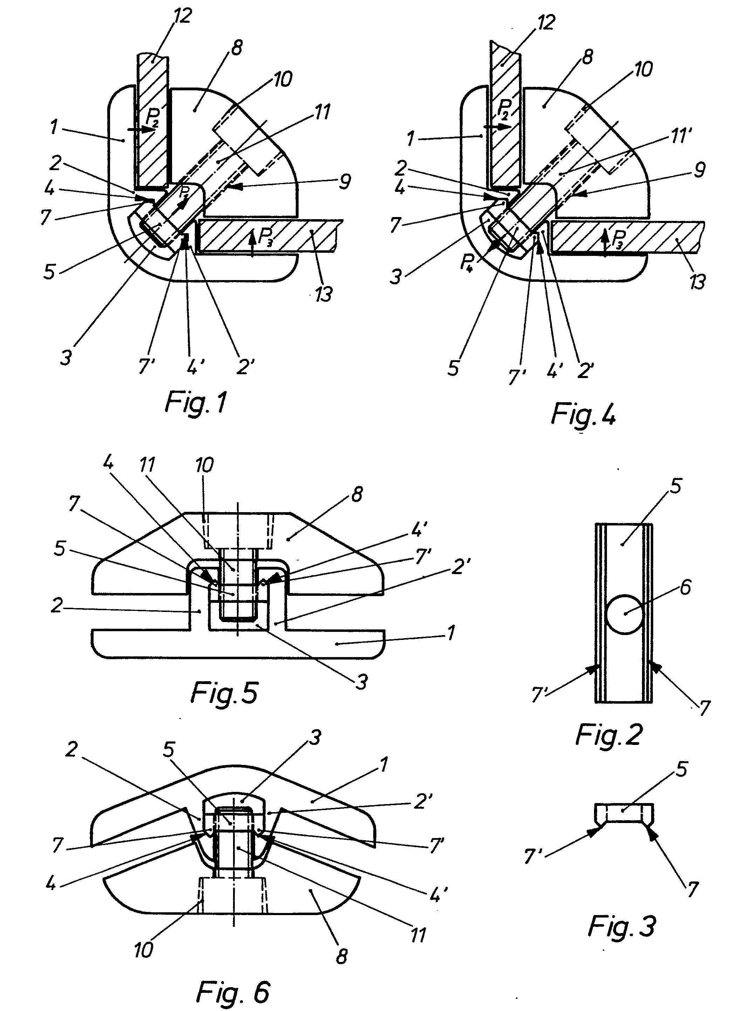

Wie aus der Figur 1 ersichtlich ist, besteht der erfindungsgemässe Beschlag aus einer Backe 1 mit zwei Rippen 2, 2', welche einen Kanal 3 bilden. Auf den Innenseiten der Enden der Rippen 2, 2' sind je eine Längsnut 4, 4' mit keilförmigem Querschnitt angebracht.

Wie aus Figur 2 ersichtlich ist, hat das Zwischenstück 5 die Form eines quaderförmigen Gleitteils und ist in der Mitte mit einer Gewindebohrung 6 versehen. Der Gleitteil 5 ist ferner an seiner Vorderseite mit je einem parallel zu den Längskanten verlaufenden, keilförmigen Vorsprung 7, 7' versehen.

Die zweite Backe 8 ist mit einer Bohrung 9 zum Hindurchführen einer Schraube 11 sowie einer Ausnehmung 10 zur Versenkung des Kopfes der Schraube 11 versehen. Zwecks Verbindung der teilweise dargestellten Wände 12, 13 wird der Gleitteil 5 so in den Hohlraum des rohrförmigen Backenteils 2 eingesteckt, dass die Vorsprünge 7, 7' den Nuten 4, 4' gegenüberstehen, worauf die Schraube 11 in die Gewindebohrung 6 eingeschraubt und angezogen wird. Durch die durch den Pfeil $P_1$ angedeutete Anzugskraft werden die Vorsprünge 7, 7' in die Nuten 4, 4' an den Rippen 2, 2' gepresst, wodurch in den Klemmteilen der Backe 1 die in Figur 1 durch die Pfeile $P_2$, $P_3$ angedeuteten, gegen die Wandauflageflächen der zweiten Backe 8 gerichteten Anpresskräfte auftreten. Stärkeres Anziehen der Schraube 11 führt also nicht etwa zu einem elastischen Wegspreizen der Klemmteile der Backe 1 von den Wandauflageflächen der Backe 8, sondern zieht im Gegenteil die freien Enden der Klemmteile verstärkt gegen diese Wandauflageflächen.

Bei der in Figur 4 dargestellten Variante des Beschlags gemäss Figur 1 ist eine Schraube 11' mit einem etwas längeren Bolzen vorhanden, so dass beim Anziehen der Schraube das freie Bolzenende in Richtung des Pfeils $P_4$ gegen den diesem gegenüberliegenden Teil der Backe 1 gepresst wird und zusätzlich einen Anpressdruck in Richtung der Pfeile $P_2$, $P_3$ bewirkt.

Anstatt eine Schraube mit einem verlängerten Bolzen zu verwenden, kann man natürlich auch die Ausnehmung 10 in der Backe 8 vergrössern, so dass eine stärkere Versenkung des Schraubenkopfes erfolgt.

Die Figuren 5 und 6 zeigen weitere Ausführungsbeispiele des erfindungsgemässen Beschlags, welche insbesondere für die Verbindung von Wänden für Ausstellungsgegenstände geeignet sind.

- 1 -                           0057662

### Patentansprüche
================

1. Beschlag zum lösbaren Verbinden von plattenförmigen Bauelementen (12, 13), insbesondere Wänden, mit gegeneinander pressbaren, die Elemente (12, 13) aufnehmenden Backen (1, 8) und einem eine Gewindebohrung (6) aufweisenden, mittels einer Schraube (11) mit den Backen (1, 8) verbindbaren Zwischenstück (5), dadurch gekennzeichnet, dass die eine Backe (1) zwei Rippen (2, 2') aufweist, welche einen Kanal (3) bilden, wobei an den Rippenenden je eine keilförmige Längsnut (4, 4') vorhanden ist, und dass das Zwischenstück (5) die Form eines quaderförmigen, in den Kanal (3) einsteckbaren Gleitteils hat und mit zwei in Längsrichtung verlaufenden, keilförmigen, in die Längsnuten (4, 4') der Rippen (2, 2') eingreifenden Vorsprüngen (7, 7') versehen ist.

2. Beschlag nach Anspruch 1, dadurch gekennzeichnet, dass die Backe (1) mit den Rippen (2, 2') winkelig ausgebildet ist.

3. Beschlag nach Anspruch 2, dadurch gekennzeichnet, dass der Winkel der Backe (1) 90$^{o}$ beträgt.

4. Beschlag nach Anspruch 2, dadurch gekennzeichnet, dass der Winkel der Backe (1) ein stumpfer Winkel ist.

0057662

1/1

Fig. 1

Fig. 4

Fig. 5

Fig. 2

Fig. 6

Fig. 3